(19) **Europäisches Patentamt / European Patent Office / Office européen des brevets**

(11) **EP 3 592 514 B2**

(12) **NEW EUROPEAN PATENT SPECIFICATION**
After opposition procedure

(45) Date of publication and mention
of the opposition decision:
**15.04.2026 Bulletin 2026/16**

(45) Mention of the grant of the patent:
**19.05.2021 Bulletin 2021/20**

(21) Application number: **18710838.6**

(22) Date of filing: **09.03.2018**

(51) International Patent Classification (IPC):
**B26B 21/52** *(2006.01)*

(52) Cooperative Patent Classification (CPC):
**B26B 21/522; B26B 21/528**

(86) International application number:
**PCT/EP2018/055929**

(87) International publication number:
**WO 2018/162720 (13.09.2018 Gazette 2018/37)**

(54) **SHAVER HANDLE, SHAVER INCLUDING SUCH A HANDLE AND METHOD OF MANUFACTURING THE SAME**

RASIERERGRIFF, RASIERAPPARAT MIT SOLCH EINEM GRIFF UND VERFAHREN ZUR HERSTELLUNG DAVON

MANCHE DE RASOIR, RASOIR COMPRENANT UN TEL MANCHE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2017 EP 17160416**
**10.03.2017 EP 17160417**

(43) Date of publication of application:
**15.01.2020 Bulletin 2020/03**

(73) Proprietor: **BIC Violex Single Member S.A.**
**14569 Anoixi (GR)**

(72) Inventors:
• **GRATSIAS, Spiros**
**113 63 Kipseli - Athens (GR)**
• **CHRISTOFIDELLIS, Efstratios**
**145 62 Kifisia (GR)**

• **PSIMADAS, Ioannis - Marios**
**152 35 Vrilissia - Athens (GR)**
• **BOZIKIS, Ioannis**
**117 41 Koukaki - Athens (GR)**
• **PAPAGEORGIS, Phaedon**
**145 65 Agios Stefanos (GR)**

(74) Representative: **Peterreins Schley**
**Patent- und Rechtsanwälte PartG mbB**
**Hermann-Sack-Straße 3**
**80331 München (DE)**

(56) References cited:
| | |
|---|---|
| GB-A- 1 520 834 | GB-A- 2 100 646 |
| GB-A- 543 801 | US-A- 4 309 821 |
| US-A- 5 784 785 | US-A- 950 113 |
| US-A1- 2012 023 762 | |

**Description**

FIELD

The disclosure relates to shaver handles, shavers including such handles and methods of manufacturing the same.

BACKGROUND

Shaver handles are usually compact plastic molded parts, molded as a single part or sometimes molded as several parts which are later assembled.

WO2006081842 shows an example of a known shaver handle Also GB2100646 or US4309821 discloses a shaver handle according to the state of the art.

One of the purposes of the present disclosure is to improve the shaver handles of the prior art, in particular with regard to material consumption and economy.

SUMMARY

Thus, the present disclosure proposes a handle for a wet shaver according to claim 1 and a method for reducing the amount of raw material used in manufacturing a handle for a wet shaver according to claim 10.

Thanks to the claimed features, the mechanical structure of the handle body can be highly efficient and may save a lot of material compared to compact handles full of solid material, for the same or similar mechanical properties.

Embodiments of such a shaver handle may incorporate one or more of the following features:

- said cell structure haS an envelope volume $V_t$ which encompasses a certain empty volume $V_e$, a ratio $V_e/V_t$ of said empty volume on said envelope volume being between 33% and 90% ;
- said ratio $V_e/V_t$ is more than 65 %;
- said cell structure is formed by using a space partitioning method;
- said cell structure is formed as a Voronoi diagram;
- said cell structure is formed as a honeycomb cell structure;
- the handle has a bending efficiency ratio $R_{be}$ of more than $1.20 \ 10^{-4}$ N.mm$^{-4}$, wherein said bending efficiency ratio is defined as:

$$R_{be} = (F/d)/V_m,$$

wherein:

- F is a force applied to a distal end of the handle body while the head supporting portion of the handle is fixed, said force being applied substantially perpendicularly to a general direction of the handle,
- d is a resulting displacement of the distal end of the handle,
- $V_m$ is the volume of solid material of the handle,

wherein the ratio $R_{be}$ is higher compared to a compact handle of the same external shape;
- said bending efficiency ratio is more than $1.30 \ 10^{-4}$ N.mm$^{-4}$;
- said handle body has an outside surface defining a shape of said handle body and said cell structure includes a grid shell structure forming a skin which continuously extends according to said outside surface and surrounds an inner volume, the grid shell structure forming said hollow cells which are open toward the inner volume and at the outside surface, and said solid walls separating said hollow cells parallel to said outside surface;
- said inner volume is empty and thus deprived of solid walls;
- said cell structure is formed along the whole volume of the handle;
- the handle body extends longitudinally along a central line between a distal end and a proximal end close to the head supporting portion, and said grid shell structure continuously extends around said central line;
- said grid shell structure has a top portion, a bottom portion and two side portions all extending along the central line from the distal end to the proximal end, and said grid shell structure forms an apex at said distal end, continuously joining the top portion, bottom portion and side portions;
- said hollow cells represent between 30 % and 60 % of said outside surface;
- said hollow cells have an average surface density comprised between 0.3 and 3 cells / cm$^2$;

- said hollow cells are disposed such that a plane perpendicular to said central line, intersects an average number of empty cells comprised between 3 and 15;
- said hollow cells are disposed such that a plane including said distal end and said proximal end, intersects an average number of hollow cells comprised between 3 and 20.

A further object of the disclosure is a shaver comprising a handle with any of the above described features and a shaver head mounted on the head supporting portion of said handle.

Still another object of the disclosure is a method for reducing the amount of raw material used in manufacturing a handle for wet shaver comprising defining a cell containing structure by using a space partionioning algorithm, wherein the material volume used to manufacture said handle is at least 33% inferior compared to a handle having a similar bending efficiency ratio. Said space partinioning algorithm may define a cell containing structure formed as a Voronoi diagram

The above and other objects and advantages will become apparent from the detailed description of one embodiment of the disclosure, considered in conjunction with the accompanying drawings.

## BRIEF DESCRIPTION OF THE DRAWINGS

In the drawings:

- Figures 1 and 2 are overall perspective views of a shaver according to one embodiment of the disclosure, viewed in two directions,
- Figure 3 is a section view of the shaver of Figures 1 and 2, the shaver being cut in the sagittal plane P0 of Figure 1,
- Figures 4 and 5 are section views of the handle of the shaver of Figures 1-3, respectively cut in planes P1 and P2 of Figure 3,
- Figure 6 illustrates the envelope surface of the handle of the shaver shown in Figures 1-5,
- Figure 7 is a view similar to Figure 1, for a second embodiment,
- Figure 8 is a section view of the handle body of the shaver of Figure 7, the section being taken along plane P0 of Figure 7,
- Figure 9 is a section view in a plane perpendicular to plane P0, in a variant of the second embodiment,
- Figure 10 is a view similar to Figure 1, for a third embodiment,
- Figure 11 is a perspective view of the handle body of the shaver of Figure 10, viewed in a direction opposite to that of Figure 10,
- Figure 12 is a section view of the handle body of the shaver of Figure 10, the section being taken along plane P0 of Figure 7.

## MORE DETAILED DESCRIPTION

In the drawings, the same reference numbers denote identical or similar elements.

**First embodiment:**

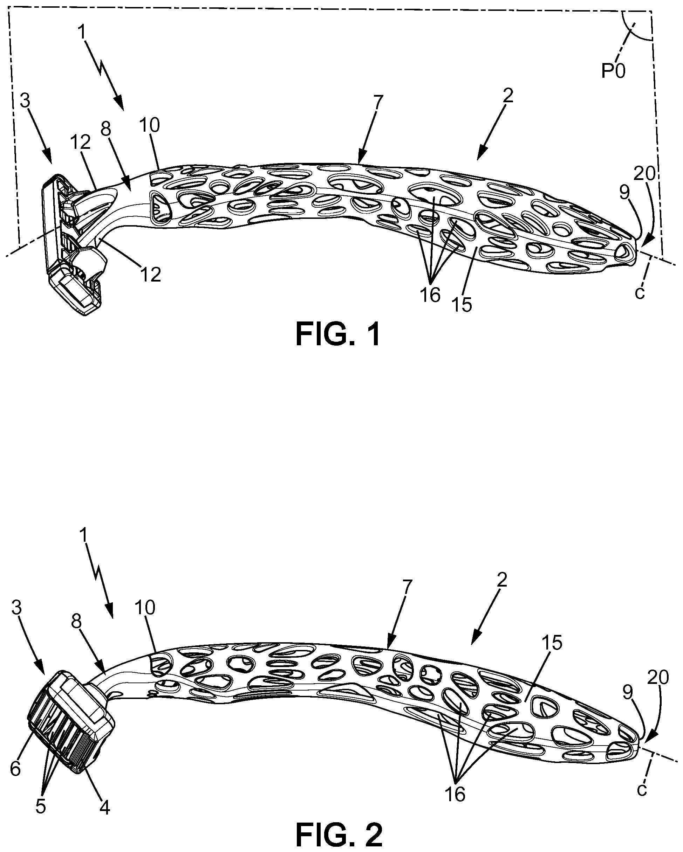

Figures 1 and 2 illustrate a shaver 1 according to a first embodiment, comprising a handle 2 and a shaver head 3.

The shaver head 3 may have a guard 4, one or several blades 5 and possibly a cover 6 or similar.

The handle 2 may be formed in one piece. In that case, the handle 2 may be formed by a digital fabrication technology such as three dimensional (3D) printing, also called additive manufacturing. Said 3D printing may be chosen in particular among additive manufacturing methods such as material extrusion (e.g. fused deposition modelling etc.), material jetting, VAT photopolymerization (e.g. digital light processing and electron beam melting, stereolithography etc.), sheet lamination, direct energy deposition, powder bed fusion (e.g. laser sintering etc.) and binder jetting. Additionally a second step may follow, having the part shaped using conventional techniques (e.g. milling).

Alternatively, the handle may be formed in two or more parts which are later assembled together. In that case, the handle may be manufactured by injection molding or by any known manufacturing method including additive manufacturing.

The handle 2 may be formed in one or several materials. For instance, the handle 2 may be formed in one or several of the following materials: plastic materials, metals, mixtures of synthetic and natural materials including wood and paper, etc.

The handle 2 may comprise an elongated handle body 7 and a head supporting portion 8 supporting the shaver head 3. The shaver head 3 may be removably or non-removably attached to the head supporting portion 8.

The handle body 7 is adapted to be held in hand by a user. The handle body 7 extends between a distal end 9 (opposite the head supporting portion 8) and a proximal end 10 (close to the head portion 8), along a central line C. The central line C may be curved. The central line C may be included in a sagittal plane P0.

The shaver head 3 may be connected to the head supporting portion 8 by any known way, for instance pivotally around a pivot axis perpendicular to the sagittal plane P0, or otherwise.

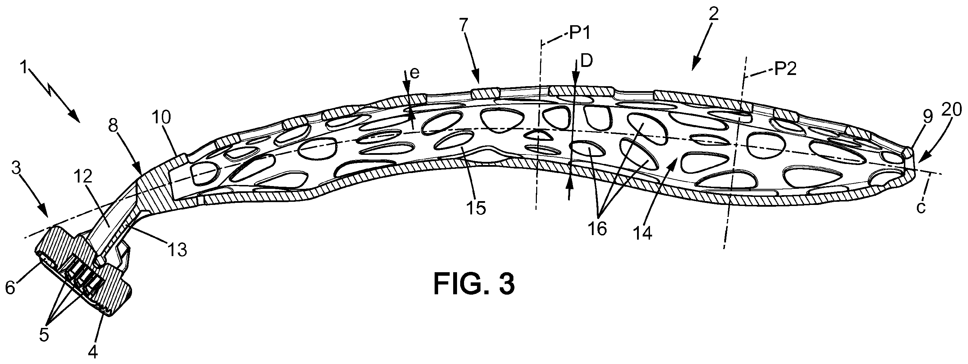

In the example shown in the drawings, as can be seen in particular in Figure 3, the shaver head 3 may be pivotally mounted on two lateral arms 12 belonging to the head supporting portion 8 and elastically biased to a rest position by an elastic tongue 13 also belonging to the head supporting portion 8. Any other known way of mounting the shaver head 3 to the head supporting portion 8 would be possible.

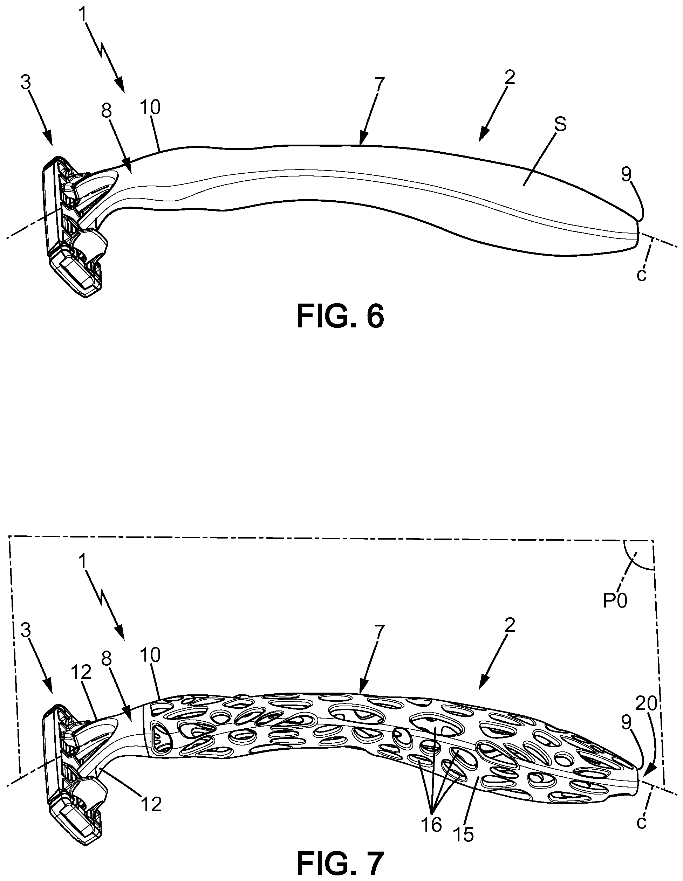

As shown in Figures 1-5, the handle body 7 may have a cell structure formed by juxtaposed hollow cells 16, at least partly separated by solid walls 15. The solid walls 15 may form a continuous, single solid part. The cell structure has an envelope volume Vt, which is the internal volume comprised by an envelope surface S of the handle 2 as shown in Figure 6.

The hollow cells 16 has more than one shape and form, for instance 2 or 3 or 4 or 5 or 6 or 7 or 8 or 9 or 10 or 11 or 12 or 13 or 14 or 15 or 16 or 17 or 18 or 19 or 20 or more different shapes and forms.

The hollow cells 16 may have may have only curved (not angled) extremities/ edges. The hollow cells 16 may have ovoidal extremities.

The envelope volume Vt encompasses a certain empty volume Ve.

The ratio Ve/Vt of said empty volume on said envelope volume being between 33% and 90%, preferably more than 65 %.

The solid walls 15 may form a network of solid threads or arms which are connected together.

The cell structure 15, 16 may be formed as any structure. The cell structure 15, 16 may be formed by using a space partitioning algorithm. Space partitioning is the process of dividing a space into non-overlapping regions, using mathematical diagrams or algorithms. Voronoi diagrams are among the most popular ways of dividing a space into partitions. The cell structure may be formed as for example a Voronoi diagram.

In a particularly advantageous embodiment, as shown in Figures 1-5, said cell structure 15, 16 is a grid shell structure. Such grid shell structure forms a continuous skin or shell which extends substantially on the envelope surface S of the handle body, thus defining the external shape of the handle body 7 and surrounding an inner volume 14 of the handle body. In that case, the above mentioned hollow cells 16 are formed in the grid shell structure and are open towards the inner volume 14 and at the envelope surface S, and said solid walls 15 are separating said hollow cells 16 parallel the envelope surface S of the handle body.

In the example shown in the drawings, the inner volume 14 is empty and free of solid walls. In other embodiments, not shown, the inner volume 14 may include solid walls belonging to the cell structure and defining empty cells, for instance according to a 3D Voronoi diagram, in which case said cell structure 15, 16 may be formed along the whole volume of the handle. In other embodiments, the handle body may be produced around any object (e.g. an insert made of any known material) entrapping it and/or enabling it to move freely in the handle body 7.

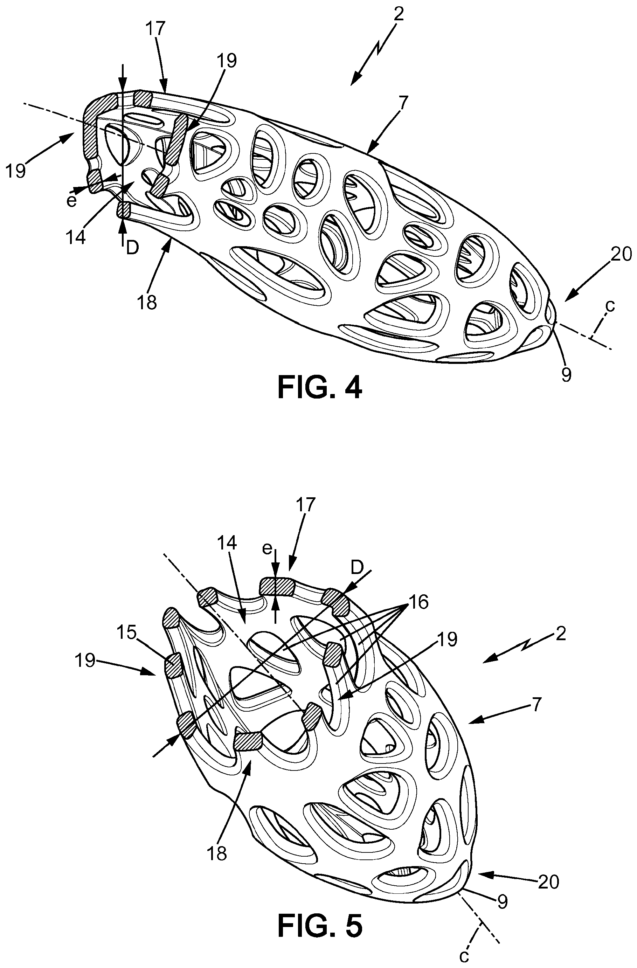

The grid shell structure 15, 16 may extend continuously around the central line C. The grid shell structure 15, 16 may define a top portion 17, a bottom portion 18 and two side portions 19 all extending along the central line from the distal end to the proximal end, and said grid shell structure forms an apex 20 at the distal end 9 of the handle body (Figures 4-5), continuously joining the top portion 17, bottom portion 18 and side portions 19.

The grid shell structure 15, 16 may be such that said empty cells 16 represent between 30 % and 60 % of said outside surface.

The grid shell structure 15, 16 may be such that said empty cells 16 have an average surface density (parallel to the envelope surface S) comprised between 0.3 and 3 cells / cm$^2$.

The grid shell structure 15, 16 may be such that a plane perpendicular to said central line C and intersecting the handle body 7 (for instance the planes P1, P2 shown in Figure 3) intersects an average number of empty cells 16 comprised between 3 and 15.

The grid shell structure 15, 16 may be such that a plane including said distal end 9 and said proximal end 10 (for instance the sagittal plane P0), intersects an average number of empty cells 16 comprised between 3 and 20.

Typically, the thickness e of the grid shell structure 15, 16 may be a few millimeters, for instance between 0,3 and 5 mm; the transverse dimension D of the grid shell structure 15, 16, perpendicular to the central line C, may be for instance between about 8 and 25 mm.

The length of grid shell structure 15, 16 may be for instance of about 90 to 120 mm and the total length of the shaver handle 2 may be for instance between about 110 to 140 mm. These dimensions may be typical for a normal handle and are not deemed to be limitative. The handle can also be smaller, for instance with a length in the range of about 30-80 mm, in which case the length of the grid shell structure 15, 16 would be consequently reduced. Additionally the handle may have the grid shell structure 15, 16 only in a portion of its length and not in the whole volume.

Thanks to the above features, the shaver handle 2 according to the disclosure saves a lot of material compared to existing shaver handles, thus also saving weight and energy. Some comparative examples are shown in Table 1 below.

The method used to calculate the values in Table 1 is as follows:

**EP 3 592 514 B2**

A variety of commercially available shaver handles were gathered.

The volume of solid material (Vm) was measured by inserting each handle at a time in a volume measuring tube full of deionized water and measuring the water volume coming out of the tube.

After this first measurement, each handle was covered with a plastic film, simulating that the handle has a compact (full of material) shape and similarly the handle was inserted in the volume measuring tube, again full of deionized water. The water volume coming out of the tube was measured, corresponding to the envelope volume (Vt).

Then the empty volume (Ve) was calculated by using the formula: Ve=Vt-Vm.

Finally the ratio Ve/Vt was calculated.

**Table 1**

| Shaver name | Volume of solid material Vm [ml] | Enveloppe volume Vt [ml] | Ratio empty volume / enveloppe volume Ve/Vt [%] |
|---|---|---|---|
| Gillette Mach3 ® | 8,30 | 11,00 | 24,55 |
| Gillette Body ® | 15.90 | 19,50 | 18,46 |
| Gillette Flexball ® | 16,40 | 19,80 | 17,17 |
| Gillette Guard ® | 11,80 | 17,50 | 32,57 |
| Gillette Venus Swirl ® | 23,80 | 24,10 | 1,24 |
| King of Shaves Azor SD ® | 13,40 | 17,20 | 22,09 |
| BIC 3 ® | 4,30 | 6,30 | 31,75 |
| BIC Comfort 3 Advance ® | 17,40 | 20,00 | 13,00 |
| BIC Flex 5 ® | 12,40 | 18,45 | 32,79 |
| BIC Ying Yang ® | 13,50 | 18,85 | 28,38 |
| **Invention - embodiment as shown in the Figures 1-5** | **4,50** | **18,20** | **75,27** |

In addition to saving material and minimizing energy footprint of the product, the invention also enables to improve the mechanical efficiency of the material used.

This mechanical efficiency, for a shaver handle, can be measured by a bending efficiency ratio Rbe, which is defined as:

$$\mathtt{Rbe \ = \ (F/d)/Vm,}$$

wherein:

- F is a force applied to the distal end 9 of the handle body while the head supporting portion 8 of the handle is fixed, said force F being applied substantially perpendicularly to a general direction of the handle (more specifically, this force F may be applied downwards, in the sagittal plane P0 and substantially perpendicular to the central line C at the distal end 9),
- d is a resulting displacement of the distal end 9 of the handle (vertical displacement),
- Vm is the volume of solid material of the handle.

This bending efficiency ratio Rbe may be possibly obtained from a theoretical analysis, in particular from a finite element analysis which uses a 3d digital model to calculate the bending efficiency ratio by taking as input the force F applied to a distal end 9 of the handle and calculating the displacement d of the distal end 9 of the handle and the volume Vm of solid material of the handle.

The following table 2 shows the comparison of the calculation of the bending efficiency ratio Rbe in the case of the shaver handle of Figures 1-5 compared to a compact shaver handle having the same envelope surface as shown in Figure 6:

**Table 2**

| | Volume of solid material Vm [ml] | F [N] | d [mm] | Rbe [N.mm$^{-4}$] |
|---|---|---|---|---|
| **Handle of Figures 1-5** | 58, 73 | 2.08 | 2.57 | 1.38 10$^{-4}$ |
| **Corresponding compact handle** | 19,537 | 5 | 2.61 | 0.98 10$^{-4}$ |

Table 2 shows that the mechanical efficiency, measured by the ratio Rbe, is higher in the case of the invention compared to a compact handle of the same external shape.

More generally, the bending efficiency ratio of a handle according to the invention is preferably more than 1.20 10$^{-4}$ N.mm$^{-4}$, even more preferably larger than 1.30 10$^{-4}$ N.mm$^{-4}$.

In addition to the above advantages, the invention also provides better gripping for the user, increasing the comfort and the feeling of safety while shaving.

In the second and third embodiments, described below, the general structure of the handle body and the above advantages are kept, so that these second and third embodiments will not be described again in detail. Mainly the differences over the first embodiment will be explained below.

**Second embodiment:**

In the second embodiment, shown in Figures 7-8, the handle body 7 may be for instance injection molded and the head supporting portion 8 may be formed as a separate part and fixed to the proximal end 10 of the handle body, for instance by fitting and / or ultrasound welding or by any other way.

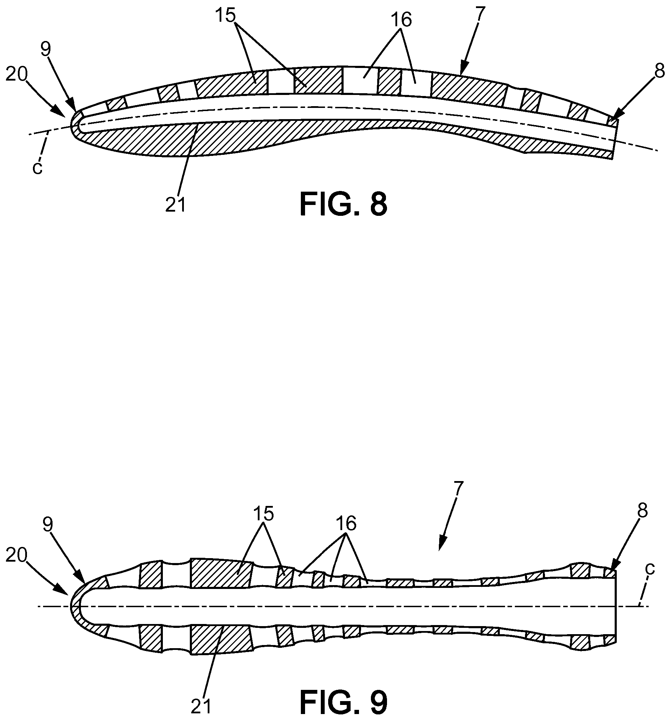

The handle body 7 may include a central empty channel 21, obtained by using a slider in the mold if the handle body is manufactured by injection molding. The central channel 21 may be axially open at the proximal end 10 of the central body. The central channel 21 may extend along the central line C of the handle, which is curved in the example of Figures 7-8. The central channel 21 and the central line C of the handle may also be straight, as illustrated in the variant of Figure 9.

In the second embodiment, the grid shell structure 15, 16 may have a larger and/or variable thickness compared to the first embodiment, the maximum width of channel 21 being defined by the neck of the handle body 7.

**Third embodiment:**

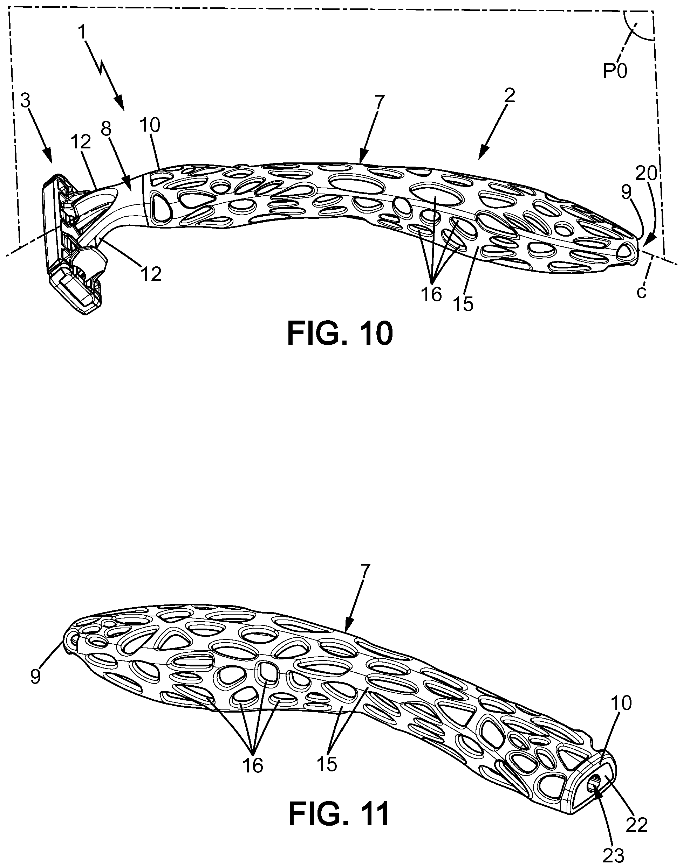

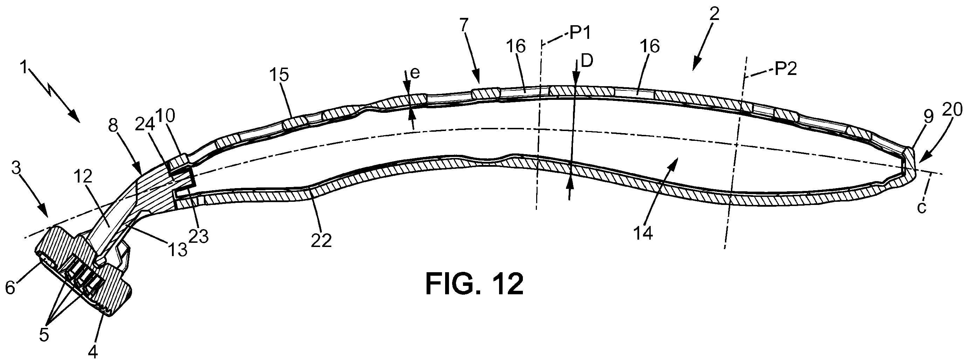

In the third embodiment, shown in Figures 10-12, the handle body 7 may be for instance injection molded on an insert 22 and the head supporting portion 8 may be formed as a separate part and fixed to the handle body 7 and / to the insert 22 at the proximal end 10 of the handle body, for instance by fitting and / or ultrasound welding or by any other way. For instance, the insert 22 may have a hole 23 at the proximal end 10 of the handle body and the head supporting portion 8 may have a lug 24 fitted into said hole 23.

The insert 22 may advantageoulsy be hollow, defining the empty inner volume 14. For instance, the insert 22 may be blow molded. The thickness of the insert 22 may typically range from a few tens of millimeters to a few millimeters.

In one specific example, the material of the insert may be PCTG (Glycol-modified Poly-Cyclohexylenedimethylene Terephthalate), for instance a PCTG with high optical transparency.

In a particular example, the grid shell structure 15, 16 may be injection molded from thermoplastic elastomer (TPE) on the insert 22.

**Claims**

1. A handle (2) for a wet shaver, having:

   - a handle body (7) adapted to be held by a user; and
   - a head supporting portion (8) adapted to support a shaver head (3) having at least one blade (5),
   wherein the handle body (7) has a cell structure (15, 16) formed by juxtaposed hollow cells (16) at least partly separated by solid walls (15), said juxtaposed hollow cells (16) being oriented in more than one direction, **characterized in that**,
   said handle body (7) has an outside surface defining a shape of said handle body and said cell structure (15, 16) includes a grid shell structure forming a skin which continuously extends according to said outside surface and surrounds an inner volume (14), the grid shell structure forming said hollow cells (16) which are open toward the inner volume (14) and at the outside surface, and said solid walls (15) separating said hollow cells (16) parallel to said outside surface,

wherein said juxtaposed hollow cells (16) have more than one shape and form.

2. A handle according to any of the preceding claims, wherein said cell structure (15, 16) is formed as a Voronoi diagram.

3. A handle according to any of the preceding claims, wherein said cell structure (15, 16) is formed as a honeycomb cell structure.

4. A handle according to any of the preceding claims, wherein said inner volume (14) is empty.

5. A handle according to claims 1-4, wherein said cell structure (15, 16) is formed along the whole volume of the handle.

6. A handle according to any of claims 1-5, wherein the handle body (7) extends longitudinally along a central line (C) between a distal end (9) and a proximal end (10) close to the head supporting portion (8), and said grid shell structure (15, 16) continuously extends around said central line (C).

7. A handle according to any of claims 1-6, wherein said grid shell structure (15, 16) has a top portion (17), a bottom portion (18) and two side portions (19) all extending along the central line (C) from the distal end (9) to the proximal end (10), and said grid shell structure forms an apex (20) at said distal end, continuously joining said top portion (17), bottom portion (18) and side portions (19).

8. A handle according to any of claims 1-7, wherein said hollow cells (16) have an average surface density comprised between 0.3 and 3 cells / cm2.

9. A handle according to any of claims 1-8, wherein said holow cells are disposed such that a plane (PO) including said distal end (9) and said proximal end (10), intersects an average number of hollow cells (16) comprised between 3 and 20.

10. A method for reducing the amount of raw material used in manufacturing a handle (2) for a wet shaver by using a space partionioning algorithm, wherein said handle comprises:

- a handle body (7) adapted to be held by a user; and
- a head supporting portion (8) adapted to support a shaver head (3) having at least one blade (5),
wherein the handle body (7) has a cell structure (15, 16) formed by juxtaposed hollow cells (16) at least partly separated by solid walls (15), said juxtaposed hollow cells (16) being oriented in more than one direction, **characterized in that**,
said handle body (7) has an outside surface defining a shape of said handle body and said cell structure (15, 16) includes a grid shell structure forming a skin which continuously extends according to said outside surface and surrounds an inner volume (14), the grid shell structure forming said hollow cells (16) which are open toward the inner volume (14) and at the outside surface, and said solid walls (15) separating said hollow cells (16) parallel to said outside surface, and
wherein said juxtaposed hollow cells (16) have more than one shape and form.

11. The method according to claim 10, wherein said space partinioning algorithm defines a cell containing structure (15,16) formed as a Voronoi diagram.

**Patentansprüche**

1. Griff (2) für einen Nassrasierer, der aufweist:

- einen Griffkörper (7), der angepasst ist, um durch einen Benutzer gehalten zu werden; und
- einen Kopfstützabschnitt (8), der angepasst ist, um einen Rasierkopf (3) zu stützen, der mindestens eine Klinge (5) aufweist,

wobei der Griffkörper (7) eine Zellenstruktur (15, 16) aufweist, die durch nebeneinandergestellte hohle Zellen (16) ausgebildet wird, die mindestens teilweise durch stabile Wände (15) getrennt sind, wobei die nebeneinandergestellten hohlen Zellen (16) in mehr als eine Richtung ausgerichtet sind, **dadurch gekennzeichnet, dass**

der Griffkörper (7) eine Außenoberfläche aufweist, die eine Form des Griffkörpers definiert, und die Zellenstruktur (15, 16) eine Gitterschalenstruktur einschließt, die eine Haut ausbildet, die sich entsprechend der Außenoberfläche fortlaufend erstreckt und ein Innenvolumen (14) umgibt, wobei die Gitterschalenstruktur die hohlen Zellen (16) ausbildet, die zu dem Innenvolumen (14) hin und an der Außenoberfläche offen sind, und wobei die stabilen Wände (15) die hohle Zellen (16) parallel zu der Außenoberfläche trennen, wobei die nebeneinandergestellten hohlen Zellen (16) mehr als eine Form und Gestalt aufweisen.

2. Griff nach einem der vorstehenden Ansprüche, wobei die Zellenstruktur (15, 16) als ein Voronoi-Diagramm ausgebildet ist.

3. Griff nach einem der vorstehenden Ansprüche, wobei die Zellenstruktur (15, 16) als eine wabenartige Zellenstruktur ausgebildet ist.

4. Griff nach einem der vorstehenden Ansprüche, wobei das innere Volumen (14) leer ist.

5. Griff nach den Ansprüchen 1 bis 4, wobei die Zellenstruktur (15, 16) entlang des gesamten Volumens des Griffs ausgebildet ist.

6. Griff nach einem der Ansprüche 1 bis 5, wobei sich der Griffkörper (7) entlang einer Mittellinie (C) zwischen einem distalen Ende (9) und einem proximalen Ende (10) nahe an dem Kopfstützabschnitt (8) der Länge nach erstreckt und wobei sich die Gitterschalenstruktur (15, 16) um die Mittellinie (C) herum fortlaufend erstreckt.

7. Griff nach einem der Ansprüche 1 bis 6, wobei die Gitterschalenstruktur (15, 16) einen oberen Abschnitt (17), einen unteren Abschnitt (18) und zwei seitliche Abschnitte (19) aufweist, die sich alle entlang der Mittellinie (C) von dem distalen Ende (9) zu dem proximalen Ende (10) erstrecken, und wobei die Gitterschalenstruktur einen Scheitelpunkt (20) an dem distalen Ende ausbildet, der den oberen Abschnitt (17), den unteren Abschnitt (18) und die seitlichen Abschnitte (19) fortlaufend verbindet.

8. Griff nach einem der Ansprüche 1 bis 7, wobei die hohlen Zellen (16) eine durchschnittliche Oberflächendichte aufweisen, die zwischen 0,3 und 3 Zellen/cm2 umfasst.

9. Griff nach einem der Ansprüche 1 bis 8, wobei die hohlen Zellen derart angeordnet sind, dass eine Ebene (PO), die das distale Ende (9) und das proximale Ende (10) einschließt, eine durchschnittliche Anzahl von hohlen Zellen (16) schneidet, die zwischen 3 und 20 umfasst.

10. Verfahren zum Reduzieren der Menge an Rohmaterial, das bei einem Herstellen eines Griffs (2) für einen Nassrasierer verwendet wird, durch Verwenden eines Raumaufteilungsalgorithmus, wobei der Griff umfasst:

- einen Griffkörper (7), der angepasst ist, um durch einen Benutzer gehalten zu werden; und
- einen Kopfstützabschnitt (8), der angepasst ist, um einen Rasierkopf (3) zu stützen, der mindestens eine Klinge (5) aufweist,

wobei der Griffkörper (7) eine Zellenstruktur (15, 16) aufweist, die durch nebeneinandergestellte hohle Zellen (16) ausgebildet wird, die mindestens teilweise durch stabile Wände (15) getrennt sind, wobei die nebeneinandergestellten hohlen Zellen (16) in mehr als eine Richtung ausgerichtet sind, **dadurch gekennzeichnet, dass** der Griffkörper (7) eine Außenoberfläche aufweist, die eine Form des Griffkörpers definiert, und die Zellenstruktur (15, 16) eine Gitterschalenstruktur aufweist, die eine Haut ausbildet, die sich entsprechend der Außenoberfläche fortlaufend erstreckt und ein Innenvolumen (14) umgibt, wobei die Gitterschalenstruktur die hohlen Zellen (16) ausbildet, die zu dem Innenvolumen (14) hin und an der Außenoberfläche offen sind, und wobei die stabilen Wände (15) die hohlen Zellen (16) parallel zu der Außenoberfläche trennen, und wobei die nebeneinandergestellten hohlen Zellen (16) mehr als eine Form und Gestalt aufweisen.

11. Verfahren nach Anspruch 10, wobei der Raumaufteilungsalgorithmus eine Struktur definiert, die Zellen enthält (15,16), die als ein Voronoi-Diagramm ausgebildet ist.

**Revendications**

1. Manche (2) pour rasoir humide, ayant :

   - un corps de manche (7) adapté pour être tenu par un utilisateur ; et
   - une partie de support de tête (8) adaptée pour supporter une tête de rasoir (3) ayant au moins une lame (5),

     dans lequel le corps de manche (7) présente une structure cellulaire (15, 16) formée de cellules creuses juxtaposées (16) au moins partiellement
     séparées par des parois solides (15), lesdites cellules creuses (16) juxtaposées étant orientées dans plus d'une direction, **caractérisé en ce que**
     ledit corps de manche (7) a une surface extérieure définissant une forme dudit corps de manche et ladite structure cellulaire (15, 16) comprend une structure de coque en grille formant une peau qui s'étend en continu selon ladite surface extérieure et entoure un volume intérieur (14), la structure de coque en grille formant lesdites cellules creuses (16) qui sont ouvertes vers le volume intérieur (14) et au niveau de la surface extérieure, et lesdites parois solides (15) séparant lesdites cellules creuses (16) parallèles à ladite surface extérieure,
     dans lequel lesdites cellules creuses juxtaposées (16) ont plus d'une forme.

2. Manche selon l'une quelconque des revendications précédentes, dans lequel ladite structure cellulaire (15, 16) a la forme d'un diagramme de Voronoï.

3. Manche selon l'une quelconque des revendications précédentes, dans lequel ladite structure cellulaire (15, 16) a la forme d'une structure cellulaire en nid d'abeilles.

4. Manche selon l'une quelconque des revendications précédentes, dans lequel ledit volume intérieur (14) est vide.

5. Manche selon les revendications 1 à 4, dans lequel ladite structure cellulaire (15, 16) est formée le long de l'intégralité du volume du manche.

6. Manche selon l'une quelconque des revendications 1 à 5, dans lequel le corps de manche (7) s'étend longitudinalement le long d'une ligne centrale (C) entre une extrémité distale (9) et une extrémité proximale (10) près de la partie de support de tête (8), et ladite structure de coque en grille (15, 16) s'étendant en continu autour de ladite ligne centrale (C).

7. Manche selon l'une quelconque des revendications 1 à 6, dans lequel ladite structure de coque en grille (15, 16) a une partie supérieure (17), une partie inférieure (18) et deux parties latérales (19) s'étendant toutes le long de la ligne centrale (C) de l'extrémité distale (9) à l'extrémité proximale (10), et ladite structure de coque en grille forme un sommet (20) au niveau de ladite extrémité distale, joignant en continu lesdites parties supérieure (17), inférieure (18) et latérales (19).

8. Manche selon l'une quelconque des revendications 1 à 7, dans lequel lesdites cellules creuses (16) a une densité de surface moyenne comprise entre 0,3 et 3 cellules/cm2.

9. Manche selon l'une quelconque des revendications 1 à 8, dans lequel lesdites cellules creuses sont disposées de telle sorte qu'un plan (PO), comportant ladite extrémité distale (9) et ladite extrémité proximale (10), coupe un nombre moyen de cellules creuses (16) compris entre 3 et 20.

10. Procédé destiné à réduire la quantité de matière première utilisée dans la fabrication d'un manche (2) pour un rasoir humide en utilisant un algorithme de partitionnement d'espace, dans lequel ledit manche comprend :

    - un corps de manche (7) adapté pour être tenu par un utilisateur ; et
    - une partie de support de tête (8) adaptée pour supporter une tête de rasoir (3) ayant au moins une lame (5),

      dans lequel le corps de manche (7) a une structure cellulaire (15, 16) formée par des alvéoles creux juxtaposés (16) au moins partiellement séparés par des parois solides (15), lesdits alvéoles creux juxtaposés (16) étant orientés dans plus d'une direction, **caractérisé en ce que**,
      ledit corps de manche (7) a une surface extérieure définissant une forme dudit corps de manche et ladite structure cellulaire (15, 16) comporte une structure de coque en grille formant une peau qui s'étend en continu selon ladite surface extérieure et entoure un volume intérieur (14), la structure de coque en grille formant lesdites cellules creuses (16) qui sont ouvertes vers le volume intérieur (14) et au niveau de la surface extérieure, et lesdites parois solides (15) séparant lesdites cellules creuses (16) parallèles à ladite surface extérieure.

dans lequel lesdites cellules creuses juxtaposées (16) ont plus d'une forme.

11. Procédé selon la revendication 10, dans lequel ledit algorithme de partitionnement d'espace définit une structure cellulaire (15,16) ayant la forme d'un diagramme de Voronoï.

**FIG. 1**

**FIG. 2**

FIG. 3

EP 3 592 514 B2

**FIG. 4**

**FIG. 5**

FIG. 6

FIG. 7

**FIG. 8**

**FIG. 9**

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006081842 A
- GB 2100646 A
- US 4309821 A